# EUROPÄISCHE PATENTSCHRIFT

(11) **EP 1 677 012 B1**
(45) Veröffentlichungstag und Bekanntmachung des Hinweises auf die Patenterteilung: **27.12.2006**
(21) Anmeldenummer: 05012083.1
(22) Anmeldetag: 04.06.2005
(51) Int. Cl.: F16B 5/02, B60R 19/24

(54) **Kunststoffbauteil**
Plastic component
Pièce en plastique

(30) Priorität: 31.12.2004 DE 202004020237 U
(43) Veröffentlichungstag der Anmeldung: 05.07.2006
(73) Patentinhaber: REHAU AG + Co, 95111 Rehau (DE)
(72) Erfinder: Lux, Stefan, 95182 Döhlau (DE)

(56) Entgegenhaltungen:
- FR-A- 2 796 674
- GB-A- 2 299 391

## Beschreibung

Die Erfindung betrifft ein Kunststoffbauteil, umfassend ein Basiselement und wenigstens ein Einstellelement zum Ausgleich von Fertigungstoleranzen bei der Montage des Kunststoffbauteils an einem Haltelement, insbesondere zur Verwendung im Kraftfahrzeugbau. Ein solches Bauteil ist aus der FR 2 796 674 A bekannt.

Kunststoffbauteile kommen beispielsweise im Kraftfahrzeugbau als Kunststoffkotflügel zum Einsatz. Um die bei der Herstellung in Kauf zu nehmenden Fertigungstoleranzen beim Zusammenfügen mehrerer Kunststoffbauteile bzw. von Kunststoffbauteilen mit anderen Bauteilen auszugleichen, sind Elemente zum Einstellen und Befestigen bekannt, die als separate Teile zur Verfügung stehen und erst bei der Endmontage an die auszurichtenden Basiselemente der Kunststoffbauteile montiert werden. Dadurch, dass diese Einstellelemente als separate Bauteile vorliegen, ergibt sich ein zusätzlicher logistischer Aufwand, muss doch sichergestellt werden, dass ein solches Einstellelement bei der Montage des Kunststoffbauteils tatsächlich zur Hand ist. Zudem besteht das Problem, dass derartige Kleinteile leicht verloren werden. Der Montageaufwand bei zwei nicht befestigten Elementen, nämlich dem Basiselement als eigentlichem Kunststoffteil und dem Einstellelement, ist recht hoch. Zudem ist die Herstellung umständlich, da für das Einstellelement ein zusätzliches Spritzgießwerkzeug erforderlich ist.

Der Erfindung liegt damit die Aufgabe zugrunde, ein demgegenüber verbessertes Kunststoffbauteil anzugeben, mit dem eine einfachere Herstellung und Montage realisiert werden können.

Zur Lösung der Aufgabe ist bei einem Kunststoffbauteil der eingangs genannten Art erfindungsgemäß vorgesehen, dass das Einstellelement mittels wenigstens einer stegförmigen, eine Sollbruchstelle darstellenden Anbindung fest an das zugehörige Basiselement angeformt ist und eine Durchbrechung zur Aufnahme eines Befestigungsmittels zur Befestigung des Kunststoffbauteils am Halteelement aufweist.

Das Basiselement bildet beispielsweise einen Teil eines Kunststoffkotflügels, der an einem Halteelement wie dem Karosserieblech zu befestigen ist.

Neben diesem Basiselement umfasst das Kunststoffbauteil ein Einstellelement, das fest mit diesem Basiselement verbunden ist und außerdem eine Aufnahme in Form einer durchgehenden Öffnung für ein Befestigungsmittel aufweist, mit dem nachfolgend die Befestigung am Halteelement erfolgt. Das Einstellelement ist bereits vor der Montage an einem weiteren Halteelement, wie beispielsweise einem Karosserieblech oder einem weiteren Kunststoffteil, fest mit dem Basiselement verbunden. Dadurch verringert sich der erforderliche logistische Aufwand, ist es doch nicht mehr erforderlich, das Einstellelement vor der Montage extra heranzuholen, womit auch ein Verlieren desselben ausgeschlossen ist. Der Montageaufwand verringert sich, da beim erfindungsgemäßen Kunststoffbauteil nicht mehr zwei lose Teile vor der Befestigung relativ zum Halteelement ausgerichtet werden müssen. Die Anbindungen, die das Einstellelement in Form kleiner Stege mit dem Basiselement verbinden, sind Sollbruchstellen, die bei Bedarf ein schnelles Lösen des Einstellelements vom Basiselement ermöglichen. So ist eine Einstellung nach dem Brechen der Sollbruchstellen problemlos möglich, nachdem mit Hilfe des zusätzlichen Befestigungsmittels eine erste Halterung des Kunststoffbauteils am Halteelement realisiert wurde. Die Sollbruchstelle wird also zweckmäßigerweise dann gebrochen, wenn eine erste grundlegende Befestigung am Halteelement gegeben ist, um den Montagevorteil nicht zu verlieren.

Erfindungsgemäß kann das Einstellelement des Kunststoffbauteils am Basiselement angespritzt sein. Das Kunststoffbauteil wird somit vollständig in einem Spritzgießverfahren hergestellt, so dass ein einziges Spritzwerkzeug ausreicht, nicht wie im Stand der Technik ein zusätzliches Werkzeug zur Herstellung des Einstellelements erforderlich ist. Selbstverständlich ist hierfür eine geeignete Konstruktion bzw. ein geeignetes Werkzeugkonzept erforderlich. Die Entformung vereinfacht sich dahingehend, dass kein zusätzlicher Schieber erforderlich ist.

Vorteilhafterweise ist die Durchbrechung zur Aufnahme einer Schraube oder einer Niete ausgebildet. Hierzu ist ggf. eine zweckmäßige Ausbildung der Wandung mit Windungen bzw. Vorsprüngen oder eine Durchbrechung in Konusform erforderlich.

Mit besonderem Vorteil kann die Sollbruchstelle zum Brechen bei der Montage mit dem Befestigungsmittel ausgebildet sein. So können die Anbindungen beispielsweise beim Betätigen einer Schraube brechen, so dass in diesem Fall genau dann eine Einstellmöglichkeit gegeben ist, wenn gleichzeitig durch das beginnende Einschrauben eine Sicherung des Basiselements bzw. Einstellelements derart gegeben ist, dass ein Wegrutschen oder Verlieren nicht mehr zu befürchten ist.

Natürlich ist es ebenso möglich, dass die Anbindungen manuell gebrochen werden, bevor die eigentliche Montage mit dem Befestigungsmittel durchgeführt wird. Dies erfordert jedoch einen zusätzlichen Arbeitsschritt, während im Fall des Brechens bei der Montage mit dem Befestigungsmittel lediglich ein Schritt, der ohnehin im Montageverfahren durchgeführt werden muss, ausgenutzt wird.

Zur Gewährleistung einer optimalen Einstellung bzw. Justierung kann das Einstellelement einen Exzenter und/oder das Basiselement ein Langloch umfassen. Durch ein Langloch im Basiselement ergeben sich in Richtung der Längsachse desselben zahlreiche Einstellmöglichkeiten. Mit einem Exzenter, also einer exzentrisch angeordneten Durchbrechung des Einstellelements ist z. B. auch eine Einstellung entlang der Achse senkrecht zur Längsachse des Langlochs möglich. Selbstverständlich kann ein Exzenter auch alleine verwendet werden. Die Ausbildung des Einstellelements ist jeweils an die Erfordernisse anzupassen, die sich durch die Größe der in Kauf zu nehmenden Fertigungstoleranzen ergeben.

Das Basiselement der Erfindung kann platten- oder scheibenförmig ausgebildet sein, wobei insbesondere im Anwendungsbereich Kraftfahrzeugbau gebogene Elemente zum Einsatz kommen.

Weitere Vorteile und Einzelheiten der Erfindung ergeben sich aus dem im folgenden dargestellten Ausführungsbeispiel sowie anhand der Zeichnungen. Dabei zeigen:
- Fig. 1: eine Draufsicht auf ein erfindungsgemäßes Kunststoffbauteil;
- Fig. 2: eine perspektivische Ansicht des erfindungsgemäßen Kunststoffbauteils gemäß Fig. 1 mit einem Befestigungsmittel;
- Fig. 3: einen Schnitt durch das erfindungsgemäße Kunststoffbauteil gemäß Fig. 2 zu Beginn der Montage an einem Halteelement;
- Fig. 4: einen Schnitt gemäß Linie IV-IV in Fig. 2 im Verlauf der Montage an einem Halteelement;
- Fig. 5: einen weiteren Schnitt durch das erfindungsgemäße Kunststoffbauteil der Fig. 2 zu Beginn der Montage an einem Halteelement und
- Fig. 6: einen Schnitt gemäß Linie VI-VI in Fig. 2 im Verlauf der Montage.

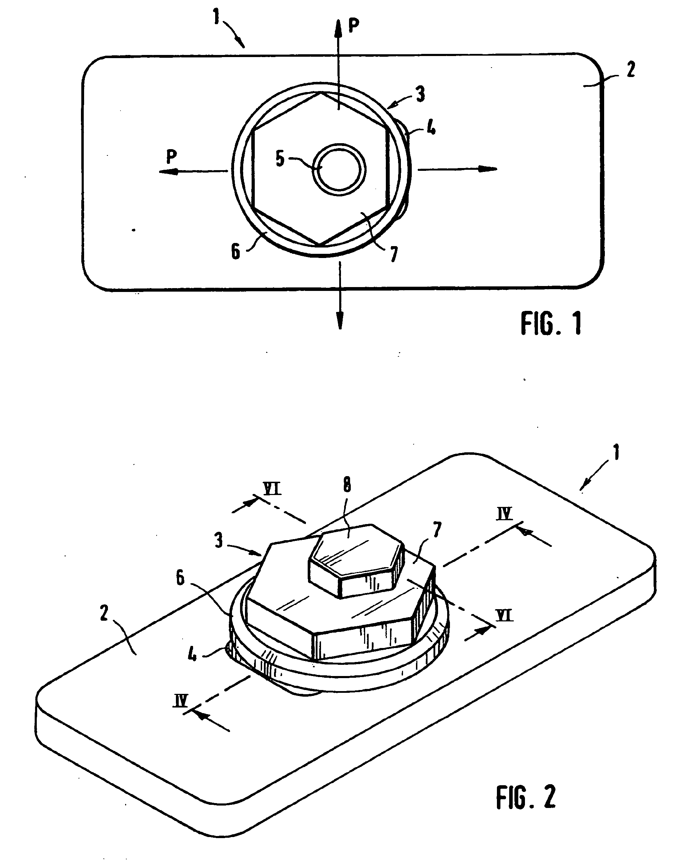

Fig. 1 zeigt eine Draufsicht auf ein erfindungsgemäßes Kunststoffbauteil 1. Das Kunststoffbauteil 1 umfasst ein Basiselement 2 und ein Einstellelement 3, wobei das plattenförmige Basiselement 2 hier aus Darstellungsgründen in Bezug auf das Einstellelement 3 nicht im richtigen Größenverhältnis dargestellt ist. Im Allgemeinen wird das Basiselement 2 deutlich größer sein als das Einstellelement 3.

Das Basiselement 2 weist ein Langloch 4 auf, über dem sich das Einstellelement 3 befindet. Das Einstellelement 3 ist mit einer exzentrischen Bohrung 5 ausgebildet, die als Durchbrechung zur Aufnahme eines hier nicht gezeigten Befestigungsmittels dienen kann. Die sich durch diese Ausbildung ergebenden Einstellmöglichkeiten sind durch die Pfeile P angedeutet.

Das Einstellelement 3 ist stufig ausgebildet derart, dass ein unterer Teil 6 zu erkennen ist, der einen kreisförmigen Umfang aufweist, während ein oberer Teil 7 einen sechseckigen Umfang hat. Der Sechs-Eck-Umfang erleichtert das Angreifen von Werkzeugen, um das Einstellelement 3 beispielsweise zu drehen. Die scheibenförmige Ausbildung des unteren Teils 6 gewährleistet eine gute Abdeckung des Langlochs 4 und verhindert, dass das Basiselement 2 beim Angreifen eines Werkzeugs beschädigt wird.

Fig. 2 zeigt eine perspektivische Ansicht des erfindungsgemäßen Kunststoffbauteils 1 der Fig. 1 mit einem Befestigungsmittel 8. Das Befestigungsmittel 8, das einen sechseckigen Kopf aufweist, ist in der exzentrischen Bohrung 5 des Einstellelements 3 aufgenommen. Mit Hilfe des Befestigungsmittels 8 kann das Einstellelement 3 und damit auch das Basiselement 2 an einem hier nicht dargestellten Halteelement befestigt werden. Mit Hilfe der exzentrischen Bohrung 5 und des Langlochs 4 ist, wie im Zusammenhang mit Fig. 1 gezeigt, bei der Montage mit Hilfe des Befestigungsmittels 8 eine Justierung möglich.

Das erfindungsgemäße Kunststoffbauteil 1 lässt sich im Rahmen eines einzigen Verfahrensschrittes mit einem Spritzgussverfahren herstellen.

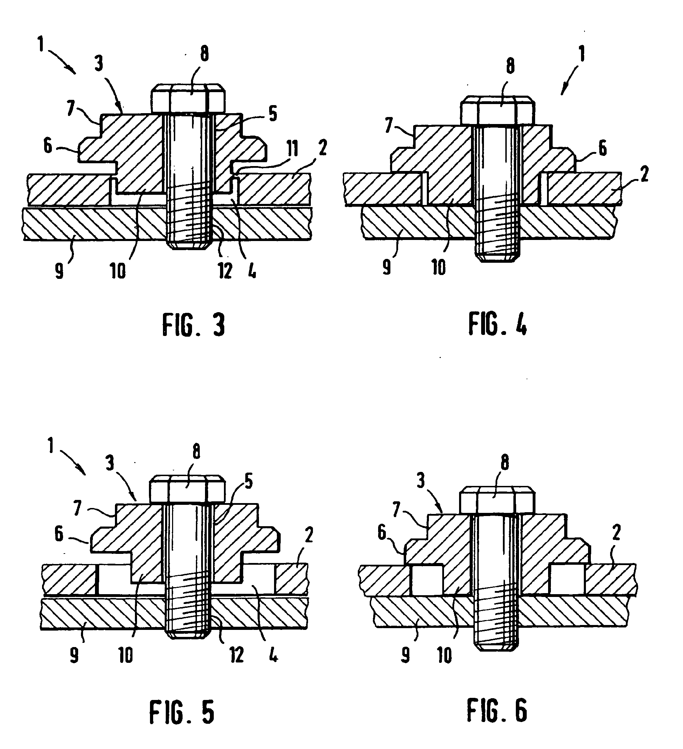

Fig. 3 zeigt einen Schnitt durch das erfindungsgemäße Kunststoffbauteil 1 gemäß Fig. 2 zu Beginn der Montage an einem Halteelement 9. Bei dem Halteelement 9 handelt es sich hier um ein Blechelement, je nach Anwendungsbereich sind als Halteelemente jedoch auch Kunststoffelemente möglich.

Das Einstellelement 3 verfügt neben dem oberen Teil 7 sowie dem unteren Teil 6 des Weiteren über ein Sockelelement 10 zum Einpassen des Einstellelements 3 in die Öffnung des Basiselements 2, hier das Langloch 4.

Über stegförmige Anbindungen 11 ist das Einstellelement 3 mit dem Basiselement 2 zu Beginn der Montage fest verbunden. In der Durchbrechung des Einstellelements 3, also hier der exzentrischen Bohrung 5, ist das Befestigungsmittel 8 aufgenommen, das zudem in eine Öffnung 12 des Halteelements 9 eingreift. Mit Hilfe des Befestigungsmittels 8 erfolgt im weiteren Verlauf ein Fixieren des Kunststoffbauteils 1 am Halteelement 9.

Fig. 4 zeigt einen Schnitt gemäß Linie IV-IV in Fig. 2 im weiteren Verlauf der Montage des Kunststoffbauteils 1 am Halteelement 9. Die Anbindungen, die Sollbruchstellen darstellen, sind in diesem Montageschritt bereits gebrochen, das Befestigungsmittel 8 verbindet das Kunststoffbauteil 1 mittels des nun mit seinem unteren Teil 6 fest auf dem Basiselement 2 aufliegenden Einstellelements 3 mit dem Halteelement 9. Das Sockelelement 10 des Einstellelements 3 ist vollständig in der Öffnung des Basiselements 2 aufgenommen, wobei etwas Spiel seitlich zum Basiselement 2 besteht. Auf dem oberen Teil 7 des Einstellelements 3 liegt der Kopf des Befestigungsmittels 8 auf. Aufgrund der nicht mittigen, sondern exzentrischen Bohrung 5 kann das Kunststoffbauteil 1 nach einer entsprechenden Rotation des Einstellelements 3 in Bezug auf das Halteelement 9 justiert werden. Eine weitere Einstellmöglichkeit ist durch das Langloch 4 gegeben. So ist mit dem erfindungsgemäßen Kunststoffbauteil 1 ein Ausgleich von Fertigungstoleranzen problemlos möglich, während gleichzeitig das Einstellelement 3 verliersicher am Basiselement 2 des Kunststoffbauteils 1 befestigt ist, bis die Anbindungen, die Sollbruchstellen darstellen, beim Betätigen des Befestigungsmittels 8 brechen, also in einem Montageschritt, in dem ein Verlieren des Einstellelements 3 nicht mehr zu befürchten ist.

Fig. 5 zeigt einen weiteren Schnitt durch das erfindungsgemäße Kunststoffbauteil 1, wiederum zu Beginn der Montage. Das Einstellelement 3 ist am Basiselement 2 durch die hier nicht sichtbaren Anbindungen befestigt, die in Bezug auf das Langloch 4 vorwiegend dort angeordnet sind, wo ein geringerer Abstand des Sockelelements 10 des Einstellelements 3 zum Basiselement 2 des Kunststoffbauteils 1 besteht.

Der untere Teil 6 des Einstellelements 3 befindet sich noch deutlich oberhalb des Basiselements 2, das Befestigungsmittel 8 durchgreift zwar die exzentrische Bohrung 5 des Einstellelements 3 und die Öffnung 12 des Halteelements 9, die Befestigung des Basiselements 2 ist jedoch in diesem Montagestadium noch durch die nicht gebrochenen Anbindungen realisiert, ein Fixieren durch Andrücken des Einstellelements 3 mittels des Befestigungsmittels 8 gegenüber dem Halteelement 9 ist nicht gegeben.

Die Einstellung des Kunststoffbauteils 1 erfolgt gegebenenfalls durch eine Drehung des oberen Teils 7 bzw. ein Verschieben im Langloch 4 nach dem Brechen der Anbindungen.

Fig. 6 zeigt einen Schnitt gemäß Linie VI-VI im weiteren Verlauf der Montage am Halteelement 9. Das Einstellelement 3 liegt in diesem Montageschritt mit seinem unteren Teil 6 direkt auf dem Basiselement 2 des Kunststoffbauteils 1 auf. Das Basiselement 2 des Kunststoffbauteils 1 wird somit durch das Einstellelement 3 in Zusammenwirken mit dem Befestigungsmittel 8 sicher am Halteelement 9 fixiert. Aufgrund der vorliegenden Ausbildung der Öffnung im Basiselement 2 (Langloch 4) besteht hier ein größerer Spielraum zwischen dem Sockelelement 10 des Einstellelements 3 und dem Basiselement 2.

So bietet das erfindungsgemäße Kunststoffbauteil 1 den Vorteil einer einfachen Herstellbarkeit in einem einzigen Verfahrensschritt mittels einer Spritzgießtechnik. Im Unterschied zu herkömmlichen Kunststoffbauteilen ist kein zusätzliches Spritzgießwerkzeug zur Ausbildung des Einstellelements 3 erforderlich. Während des Transports zum Ort der Montage ist das Einstellelement 3 verliersicher mit dem Basiselement 2 verbunden. Der Aufwand für die Logistik und Montage verringert sich, während gleichzeitig durch die Ausbildung des Einstellelements 3 mit der exzentrischen Bohrung 5 und dem oberen Teil 7 in Sechseckform im Zusammenhang mit der Öffnung des Basiselements 2 alle erforderlichen Einstellmöglichkeiten gegeben sind.

## Patentansprüche

1. Kunststoffbauteil (1), umfassend ein Basiselement (2) und wenigstens ein Einstellelement (3) zum Ausgleich von Fertigungstoleranzen bei der Montage des Kunststoffbauteils (1) an einem Haltelement (9), insbesondere zur Verwendung im Kraftfahrzeugbau, **dadurch gekennzeichnet, dass** das Einstellelement (3) mittels wenigstens einer stegförmigen, eine Sollbruchstelle darstellenden Anbindung (11) fest an das zugehörige Basiselement (2) angeformt ist und eine Durchbrechung zur Aufnahme eines Befestigungsmittels (8) zur Befestigung des Kunststoffbauteils (1) am Halteelement (9) aufweist.

2. Kunststoffbauteil (1) nach Anspruch 1, **dadurch gekennzeichnet, dass** das Einstellelement (3) des Kunststoffbauteils (1) am Basiselement (2) angespritzt ist.

3. Kunststoffbauteil (1) nach einem der vorangehenden Ansprüche, **dadurch gekennzeichnet, dass** die Durchbrechung zur Aufnahme einer Schraube oder einer Niete (8) ausgebildet ist.

4. Kunststoffbauteil (1) nach einem der vorangehenden Ansprüche, **dadurch gekennzeichnet, dass** die Sollbruchstelle zum Brechen bei der Montage mit dem Befestigungsmittel (8) ausgebildet ist.

5. Kunststoffbauteil (1) nach einem der vorangehenden Ansprüche, **dadurch gekennzeichnet, dass** das Einstellelement (3) einen Exzenter und/oder das Basiselement (2) ein Langloch (4) umfasst.

6. Kunststoffbauteil nach einem der vorangehenden Ansprüche, **dadurch gekennzeichnet, dass** das Basiselement (2) platten- oder scheibenförmig ausgebildet ist.

## Claims

1. Plastic component (1), comprising a base element (2) and at least one adjusting element (3) for compensating for production tolerances when assembling the plastic component (1) on a holding element (9), in particular for use in motor vehicle construction, **characterized in that** the adjusting element (3) is fixedly, integrally formed on the associated base element (2) by means of at least one web-shaped connection (11) which constitutes a predetermined breaking point, and said adjusting element (3) has an aperture for receiving a fastening means (8) for fastening the plastic component (1) to the holding element (9).

2. Plastic component (1) according to Claim 1, **characterized in that** the adjusting element (3) of the plastic component (1) is integrally injection-moulded on the base element (2).

3. Plastic component (1) according to one of the preceding claims, **characterized in that** the aperture is designed to receive a screw or a rivet (8).

4. Plastic component (1) according to one of the preceding claims, **characterized in that** the predetermined breaking point is designed to break during assembly with the fastening means (8).

5. Plastic component (1) according to one of the preceding claims, **characterized in that** the adjusting element (3) comprises an eccentric and/or the base element (2) comprises an elongated hole (4).

6. Plastic component (1) according to one of the preceding claims, **characterized in that** the base element (2) is plate-shaped or disc-shaped.

## Revendications

1. Composant en plastique (1), comprenant un élément de base (2) et au moins un élément d'ajustage (3) pour la compensation des tolérances de fabrication lors du montage du composant en plastique (1) sur un élément de support (9), notamment pour l'utilisation dans la construction automobile, **caractérisé en ce que** l'élément d'ajustement (3) est moulé fixement sur l'élément de base associé (2) au moyen d'au moins une liaison (11) en forme de nervure constituant un point destiné à la rupture, et présente une interruption pour recevoir un moyen de fixation (8) pour la fixation du composant en plastique (1) sur l'élément de support (9).

2. Composant en plastique (1) selon la revendication 1, **caractérisé en ce que** l'élément d'ajustement (3) du composant en plastique (1) est moulé par injection sur l'élément de base (2).

3. Composant en plastique (1) selon l'une quelconque des revendications précédentes, **caractérisé en ce que** l'interruption est réalisée pour recevoir une vis ou un rivet (8).

4. Composant en plastique (1) selon l'une quelconque des revendications précédentes, **caractérisé en ce que** le point destiné à la rupture est prévu pour se casser lors du montage avec le moyen de fixation (8).

5. Composant en plastique (1) selon l'une quelconque des revendications précédentes, **caractérisé en ce que** l'élément d'ajustement (3) comprend un excentrique et/ou l'élément de base (2) comprend un trou oblong (4).

6. Composant en plastique (1) selon l'une quelconque des revendications précédentes, **caractérisé en ce que** l'élément de base (2) est réalisé en forme de plaque ou de disque.
